# EUROPEAN PATENT SPECIFICATION

(11) **EP 4 497 669 B1**
(45) Date of publication and mention of the grant of the patent: **26.11.2025**
(21) Application number: 24190525.6
(22) Date of filing: 24.07.2024
(51) Int. Cl.: B62M 1/32

(54) **BICYCLE**
FAHRRAD
VÉLO

(30) Priority: 25.07.2023 IT 202300015591
(43) Date of publication of application: 29.01.2025
(73) Proprietor: Munteanu, Ivan, 37030 Lavagno (VR) (IT)
(72) Inventor: Munteanu, Ivan, 37030 Lavagno (VR) (IT)
(74) Representative: Münchow, Vera Ute Barbara

(56) References cited:
- WO-A1-2013/151372
- CN-A- 112 158 292
- KR-A- 20050 002 783
- KR-A- 20090 129 551
- US-B2- 9 708 026

## Description

### TECHNICAL FIELD

The invention pertains to the field of bicycles and relates in particular to the manner of their propulsion and to the construction of the frame to make the bicycle compact and able to be disassembled.

### BACKGROUND OF THE INVENTION

The classic bicycle comprises a frame with a fork, a horizontal rear chainstay, an oblique rear chainstay; an upper tube and a vertical rear tube. Then the following are generally provided: a handlebar on the top of the fork, a saddle, at least two wheels, of which one front wheel hangs in a freely rotatable manner in the fork and one rear wheel is housed on the horizontal rear chainstay, and a transmission unit with two cranks equipped with pedals and connected to a gear wheel which perform a circular movement which is transmitted via a chain from the gear wheel to another gear wheel provided on the hub of the rear wheel.

These classic bicycles, due to the configuration of their frame and the positioning of the crankset and the traditional transmission unit, do not optimally use the forces applied to the cranks, they are not very compact and are difficult to design to have a form which is easy to disassemble or fold.

The known drive or transmission system does not always allow the construction of a large rear wheel beyond the standard diameters or allow for reducing the force required to pedal without the application of a gear change.

The document WO 2013/151372 A1 discloses a bicycle with a frame and a transmission unit.

### DISCLOSURE OF THE INVENTION

The object of the invention is to overcome the aforesaid drawbacks and to propose a bicycle that is able to reduce the pedalling effort, for example by providing the possibility of realizing a rear wheel larger than that usually provided in the state of the art. A further object of the invention is to provide a compact bicycle. Another object of the invention is to provide a bicycle that can be disassembled.

In a first aspect of the invention, the aim is achieved by means of a bicycle comprising:
(a) a frame comprising:
   (a-1) a fork;
   (a-2) a horizontal rear chainstay;
   (a-3) an oblique rear chainstay;
   (a-4) an upper tube;
(b) a handlebar on the upper part of the fork;
(c) a saddle;
(d) at least two wheels of which one front wheel hangs in a freely rotatable manner in the fork and one rear wheel is housed on the horizontal rear chainstay;
(e) a transmission unit suitable for driving the rear wheel and comprising:
   (e-1) two opposite cranks each equipped with a respective pedal;
   (e-2) two opposing discs facing with an inner cylindrical cavity equipped with an inner toothed ring toward the rear wheel;
   (e-3) two opposing first gear wheels each housed in a rotatable manner in one of said discs meshable/meshing with the respective inner toothed ring;
   (e-4) at least two opposing second gear wheels each connected by a respective shaft to one of said first gear wheels;
   (e-5) a hub bearing on a central cylindrical part the rear wheel and equipped on two opposite sides of the cylindrical part with two third gear wheels;
   (e-6) two opposing ring chains meshing each with the toothings of said second and third gear wheels of the same side of the bicycle or meshing with a gear change, inserted between the second and third gear wheels, and with the third gear wheels making a relative drive connection;

wherein an axle supports in a freely rotatable manner said hub and connects the two discs so as to permit the free rotation of the two discs about the axle; and
wherein said cranks are each connected with one end to one of the discs so that it can be moved around said axle by pushing on the pedal connected to the other end of the crank.

The intervention by the inventor on the transmission unit made it possible to position the crank system practically in correspondence with the rear wheel and no longer place it between the two wheels. In this way it was possible to lengthen the length of the crank compared to traditional cranks, which gives a greater lever force by reducing the force required to pedal. The position and possible increased length of the cranks (e.g. lengths roughly corresponding to the wheel radius ± 5 cm) according to the invention is even better achievable if, in a preferred embodiment of the invention, the saddle is placed on the end of the upper tube directly above the rear wheel. A consequence of this configuration is also the possibility of making large rear wheels, which obviously allows for easy propulsion. The gear wheel system directly placed in correspondence with the rear wheel also shortens the length of the chain needed and reduces the danger of it coming out of position. The two discs can easily be made with dimensions covering essentially the entire transmission unit.

Advantageously, the second and third gear wheels are sprockets, therefore first and second sprockets respectively.

In an advantageous embodiment of the invention, between each crank and the respective disc there is a ratchet connection for transmitting the movement of the crank to the respective disc. The ratchet allows a controlled articulation of the crank, prevents the propulsive movement of the same in the unwanted direction, but allows a position of the crank that is not necessarily radial around the axis of rotation of the disc.

Preferably, the ratchet connection is installed in such a way that in the direction of the active pedalling it is in the locking position, while during the passive phase of repositioning of the respective crank towards the position of the beginning of the active phase it is in the movement position.

The aforementioned sprockets, in preferred variants of the invention, can also be made with a ratchet system.

The fact that gear wheels, chains, cranks, etc. of the transmission unit are provided in pairs allows their mirrored application on the two sides of the bicycle.

In a further embodiment of the invention, the second gear wheels have different diameters and for each first gear wheel an engagement/disengagement device is provided to bring the relative first gear wheel closer to/farther from the toothed inner ring of the respective disc. By disengaging one or the other first gear wheel from the toothed ring of the disc, the connected second gear wheel is no longer driven by the movement of the disc and a simple change between two gears is achieved with respective engagements/disengagements of the first gear wheels. If a first wheel is disengaged, the ratio of its second connected gear wheel is not used, however, the rear wheel remains rotatable as the hub is housed rotatable on the axle and operable through the second gear wheel on the other side of the bicycle.

The engagement/disengagement device may, for example, be an electric motor connected with an extractable stem and retractable to the shaft that connects the first to the second gear wheel or to the shaft bearing. Also conceivable is a threaded rod driven by the electric motor that screws into a support or bearing of the shaft. An extraction (or pulling out) of the stem moves the first gear wheel away from the toothed ring, while its retraction brings it closer again, bringing it to mesh with the toothed ring of the disc.

In a variant of the invention, the third gear wheels can also have different diameters.

Variants with second gear wheels of equal diameter are conceivable or variants in which it is conceivable to insert further gear wheels or a gear change known in the art between the second and third gear wheel. Advantageously, the aforementioned shafts and the axle of the rear wheel are housed in respective bearings or supports.

During the active and passive phases (as will be described later), the crank-gear wheel systems of the left side and the right side alternate in the propulsive and entrainment action.

A particularly preferred embodiment of the invention provides that said oblique rear chainstay on one end is fixed on said horizontal rear chainstay and on the other end is equipped with an articulated bifurcation which with its two rods is fixed in articulated manner on said upper tube forming a triangle wherein said front rod is equipped with an elastic element. The articulations of the bifurcation located at least in two corners of the triangle allow a simple damping of the bicycle during use and also help its foldability.

The term "horizontal" of the rear chainstay and also of the orientation of the crank during movement (as described later) is understood as an essentially horizontal extension, that is, with a maximum inclination that preferably does not exceed 30° with respect to a support plane of the two wheels of the bicycle. Other terms known in the state of the art for rear horizontal chainstay is dropped chainstay, while the rear oblique chainstay also takes the name vertical chainstay. Often the plural "chainstays" is also used to indicate that the chainstay is generally forked to be able to include the rear wheel.

In a preferred embodiment of the invention, the bicycle does not comprise a vertical rear tube (also called a column tube) for connecting said horizontal rear chainstay to said upper tube and the saddle is fixed on said upper tube whose end is not supported by other parts of the frame. This configuration allows the damping of the bicycle by means of the bifurcation described above.

In a particularly advantageous embodiment of the invention, the bicycle further comprises
(f) a travel stop for each crank comprising:
(f-1) an arm fixed with one end on said horizontal rear chainstay and with the other end on the relative crank; and
(f-2) an elastic element, in particular a spring, fixed with one end on said arm and with the other end on the horizontal rear chainstay so as to limit the angular opening of the arm with respect to the horizontal rear chainstay and to force the pedal during use to a movement along an oval path.

Preferably, the crank is eccentrically fixed to the disc and the pedal during use does not protrude more than 5 cm beyond the rear wheel. Advantageously, the crank is mounted at a position on the disc which is located in a portion of the radius of the disc which corresponds to the central third of the radius, for example at half the radius. More advantageous are positions near the centre of the disc, which however are constructively disadvantaged.

Preferably, the crank has a length which corresponds at least to the radius of the rear wheel minus the distance between its connection to the disc and the centre of the disc.

The active and passive phases also alternate in a traditional bicycle, but in the case of a bicycle according to the invention, the effect of application of force by the cyclist is multiplied thanks to the length of the crank made possible by the particular configuration of the bicycle drive system. The length of the crank in the bicycle according to the invention may for example reach more than twice the length of a crank of a conventional bicycle.

The travel stop according to the invention allows the pedal to be practically always in the front half of the wheel or slightly ahead, allowing the cyclist to comfortably reach the pedals in any position.

From the moment of the end point of the travel limit set by the travel stop, and the action of the cyclist on the other pedal, which is found on the opposite side in the active-positive phase, due to the position of the crank as shown above, the "passive" crank is repositioned more quickly for a new active-positive phase than on a classic bicycle. The fact that, in a preferred variant of the invention, the anchorage of the crank to the disc is located between the central point of the disc and its edge, allows faster repositioning of the crank for a new active-positive phase. Of fundamental importance for the operation of this phase and the transition between the active and passive phases in general is the ratchet mechanism (movable "one-way") that is arranged at the point of anchoring the crank to the disc.

In particular, also the absence of the column tube allows a further variant of the invention to be realised wherein said connection between said rear horizontal chainstay and said curved or oblique tube can be disassembled and said upper tube comprises:
(a-4.1) a first hollow upper tube portion fixed on said fork;
(a-4.2) a second hollow upper tube portion on which said oblique rear chainstay is fixed; and
(a-4.3) a third upper tube portion bearing on one end said saddle and insertable by a relative closure in said first and said second hollow upper tube portion.

The system with tubes of different diameters, one insertable in the other, is very simple and allows a quick assembly and disassembly of the bicycle for better transport, for example in the trunk of a car.

Such an upper closure system with longitudinal tubes that can be inserted one into the other and preferably a closure, for example with a bayonet joint, further guarantees a torsional rigidity of the bicycle frame (unlike standard folding bicycles with hinged systems) to make the force applied by the cyclist more efficient, so as to minimise waste due to the deformation of the frame during pedalling.

A preferred embodiment of the invention provides an electric version of the bicycle according to the invention, wherein a motor is present, preferably inserted in the rear hub of the bicycle. A battery thereof for driving the motor may be provided, for example, in the curved tube. A pedal-assisted version, which is advantageously foldable and therefore compact in a disassembled version, has a greater autonomy than a traditional *e-bike* due to a greater efficiency in the pedalling phase thanks to the possible greater length of the crank (up to more than twice that of a standard bicycle) or allows the same autonomy as a standard bicycle to be achieved to reduce the size/power of the battery.

A further aspect of the invention relates to a process for propelling a bicycle comprising the following steps:
(I) provision of a bicycle according to the invention;
(II) exerting a force on a pedal of a crank causing the rotation of the respective disc;
(III) by meshing of the inner toothing of the disc in motion with said first gear wheel set into rotation of the first gear wheel;
(IV) via the shaft transmission of the rotary motion of said first gear wheel to said second gear wheel;
(V) entrainment of said chain by the movement of said second gear wheel and transmission of rotary motion to said third gear wheel which, being connected to said hub, puts said rear wheel into rotation;
wherein the phases (II) to (V) occur in alternating manner between the right and left sides of the bicycle.

In variants of the process according to the invention, the two first wheels can have different diameters and engagement/disengagement devices can be provided and operated that engage/disengage a first gear wheel from the toothed ring of the respective disc to change gear. The operation has been described above. Advantageously, during use of the bicycle on surfaces that are not perfectly flat, the damping means provided compensate for the irregularities of the supporting surface by compressing and relaxing the elastic elements and deforming and repositioning the bifurcation triangle. The articulations are also useful when disassembling the bicycle. Any crank travel stop allows the pedals to follow an essentially oval circuit and force the crank into positions that are temporarily essentially horizontal with respect to a supporting surface of the bicycle. The ratchet system allows the transition between the active and passive phases. In phase (V) it is conceivable to insert a gear change between the second and third gear wheel and then connect the chain to the gear change and the third gear wheel.

Preferably, said horizontal rear chainstay is connected by fixing means to said curved or oblique tube wherein said fixing means in a state of partial opening allow a rotation of said horizontal rear chainstay and/or said curved tube around the connection axle.

A preferred embodiment of the invention provides in this regard that said fixing means are located in part in the horizontal rear chainstay and in part in the curved or oblique tube, therefore: the horizontal rear chainstay comprises a hollow cylinder through which a screw passes that can be screwed in a compatible thread that is located in the curved tube in a position inside the tube itself, wherein the cylinder continues with a second hollow cylinder outside the horizontal rear chainstay, always crossed by the screw wherein a nut with a hexagonal or other geometry is arranged in the lower part of the second cylinder that is insertable in a hole with a corresponding compatible geometry located in the lower end of the curved or oblique tube to create an initial connection of defined position between the curved tube and the horizontal rear chainstay. The second cylinder in the mounted state passes into the lower space of the curved tube, and the screw is screwed into the thread. A small elasticity of movement along the height of the nut is advantageously given by a spring inserted on the screw and by the path allowed by the degree of screwing to extract the nut from its hole and allows a rotation of the curved tube around the first cylinder or of the cylinder inside the curved or oblique tube to be able to rotate the front part of the bicycle on the rear one and vice versa without disassembling the curved or oblique tube completely from the horizontal rear chainstay.

A further aspect of the invention relates to a method for assembling/disassembling a bicycle comprising the following steps:
(i) provision of a bicycle equipped with features as provided for in the eighth claim and equipped with fixing means provided between the horizontal rear chainstay and the curved or oblique tube;
(ii) for mounting
   (ii-1) insertion of said third upper tube portion into said second hollow upper tube portion;
   (ii-2) closing the fixing means of the connection between the rear horizontal chainstay and the curved or oblique tube;
   (ii-3) connection of the second portion of the upper tube to the first portion of the upper tube by pushing the third portion of the upper tube into said first portion of the upper tube and closing the closure provided; or
(iii) for dismounting:
   (iii-1) releasing said closure and extracting said third upper tube portion from said first upper tube portion;
   (iii-2) opening of the fixing means of the connection between the rear horizontal chainstay and the curved or oblique tube;
   (iii-3) extraction of said third upper tube portion from said second hollow upper tube portion.

The opening of the fixing means between the oblique rear chainstay and the curved or oblique tube can mean a complete detachment between the horizontal rear tube and the curved tube or only a partial detachment that provides for the rotation of the curved or oblique tube with respect to the horizontal rear chainstay or vice versa.

The succession of steps is not very complex and allows fast mounting and dismounting of the bicycle. The extraction of the third upper tube portion from the second upper tube portion could also take place before the phase (iii-3).

The features and advantages described for one aspect of the invention may be transferred *mutatis mutandis* to the other aspect of the invention.

The industrial applicability is obvious from the moment in which it becomes possible to create a compact bicycle by reducing the forces necessary for its propulsion and a bicycle that in variants can also be disassembled.

Said objects and advantages will be further highlighted in the description of a preferred exemplary embodiment of the invention provided by way of non-limiting example only.

Variants and further features of the invention are the subject matter of the dependent claims. The description of the preferred exemplary embodiment of the bicycle, the process of its propulsion and the method for its mounting or dismounting according to the invention is given by way of example and not limitation with reference to the accompanying drawings. In particular, unless otherwise specified, the number, shape, size and materials of the system and of the individual components may vary, and equivalent elements may be applied without deviating from the inventive concept.

### DESCRIPTION OF A PREFERRED EXEMPLARY EMBODIMENT

- Fig. 1: shows, in a side view, an exemplary embodiment of a bicycle according to the invention.
- Fig. 2: compares the bicycle in Fig. 1 with a conventional bicycle according to the state of the art.
- Figs. 3A-F: show in sequence the various driving phases of the bicycle transmission unit of Fig. 1.
- Figs. 4A-C: show for the phases of Figs. 3C-E, the operation of the crank travel stop.
- Fig. 5: shows the bicycle of Fig. 1 in the disassembled state.
- Fig. 6: shows in section the lower locking mechanism of the bicycle of Fig. 1 in the disassembled state.
- Fig. 7: shows a perspective view of the lower part of the lower closing mechanism of Fig. 6, viewed from the inside of the fork forming the horizontal rear chainstay.
- Fig. 8: shows in a top view the bicycle transmission unit of Fig. 1.
- Fig. 9: shows in a perspective view, partially exploded, the ratchet mechanism of the crank of the bicycle according to the invention.
- Fig. 10: shows in a top view the bicycle transmission unit of Fig. 8 with an implementation variant of the horizontal rear chainstay.

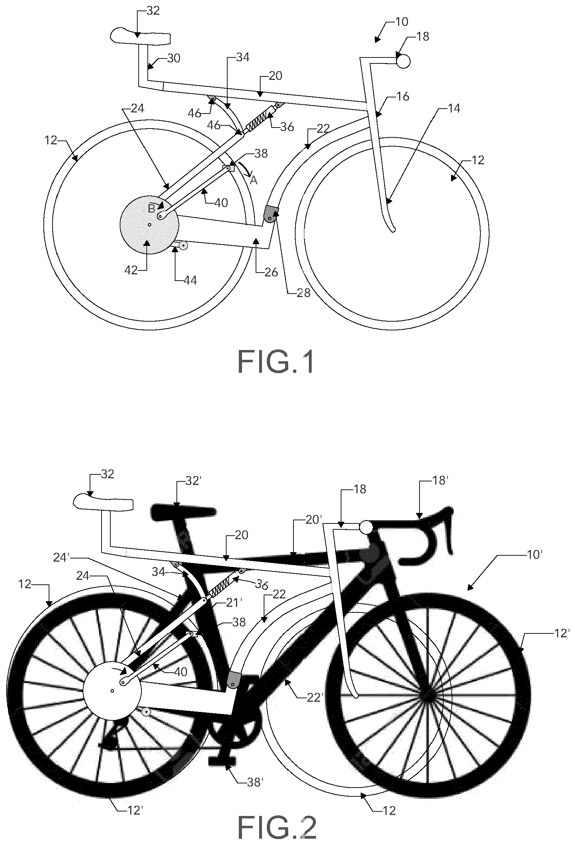

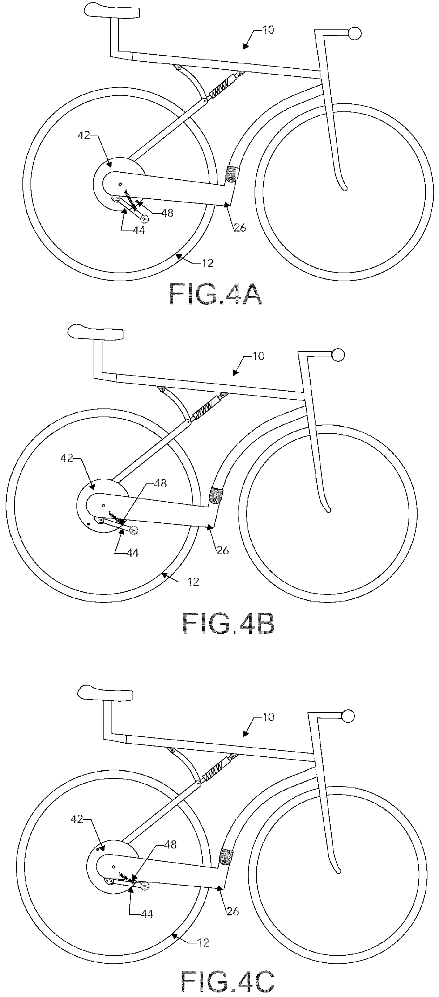

Fig. 1 shows, in a side view, an exemplary embodiment of a bicycle **10** according to the invention. Two wheels **12** are noted of which the first (front) one is inserted inside a fork **14**. The wheels **12** can be equipped with the classic spokes (not shown) and comprise a rim and a tyre (not shown in detail). The steering tube **16** carries the handlebar **18**. The frame comprises an upper tube **20** and a curved tube **22** corresponding to the oblique tube of a classic bicycle. There is no classic vertical tube or column, it is the oblique rear chainstay **24** that connects to the upper tube **20** and gives stability to the frame. The horizontal rear chainstay **26** is connected with the curved tube **22** by a fixing means **28**. The upper tube **20** is equipped on one end with the seat post **30** which supports the saddle **32**. The oblique rear chainstay **24** ends in a kind of bifurcation composed of a rod **34** and an elastic element **36** that together form a triangle with the upper tube **20**. The pedal **38** is fixed on a crank **40** which in turn is fixed on a disc **42** which, following the movement (arrow **A**) of the pedal **38**, rotates clockwise (arrow **B**). Behind the disc **42** an arm **44** of the crank travel stop system can be seen, which will then be shown with reference to Figs. 4A-C. The rod **34** and the elastic element **36** form a damping system of the bicycle **10**. In the case of differences in altitude or obstacles over which the bicycle **10** passes, the horizontal rear chainstay **26** is pushed upwards, resulting in a thrust of the oblique rear chainstay **24** in the direction of its extension towards the upper tube **20**. During this movement, the elastic element **36** (for example a spring) is compressed and simultaneously, the rod **34** articulated to the upper tube **20** and to the oblique rear chainstay **24** through respective articulations **46**, is moved towards the rear tube **20** reducing the dimensions of the aforementioned triangle. Subsequently, the elastic element **36** relaxes, the rod **34** returns to its initial position, as does the oblique rear chainstay **24**.

Fig. 2 compares the bicycle **10** of Fig. 1 with a traditional bicycle **10'** according to the state of the art. In the bicycle **10** according to the invention, the saddle **32** is positioned centrally above the rear wheel **12**, whereas in the case of the conventional bicycle **10'**, the saddle **32'** is positioned further forward. The same holds for the position of the respective handlebars **18** and **18'** with respect to the rear wheel **12**, **12'**. The curved tube **22** of the bicycle **10** essentially corresponds to the cross tube **22'** of the bicycle **10'**. Except for their inclination, there is correspondence between the upper tubes, respectively **20** and **20'**. In the bicycle **10** the vertical tube or column **21'** is completely missing; the oblique rear chainstay **24** of the bicycle **10** is connected by means of the damping system **34**, **36** (which in the traditional bicycle **10'** is not provided) to the upper tube **20,** while in the traditional bicycle **10'** the respective oblique rear chainstay **24'** is fixed on the vertical tube **21'**. The pedals **38** of the bicycle **10** according to the invention practically do not protrude beyond the wheel **12**, while the pedals **38'** of the bicycle **10'** are located between the two wheels **12'**.

The bicycle **10** according to the invention is therefore shorter and more compact than the classic **10'** bicycle and allows the construction of longer cranks **40,** which is also due to their application in a relatively central position on the rear wheel **12** with an increased leverage effect. For example, crank lengths of 34 cm are achievable compared to the 17 cm of the traditional bicycle **10'**. The frame of the bicycle **10** according to the invention, in particular due to the absence of the vertical tube **21'**, allows, as will be seen below, a simple construction of the disassembly of the bicycle **10.**

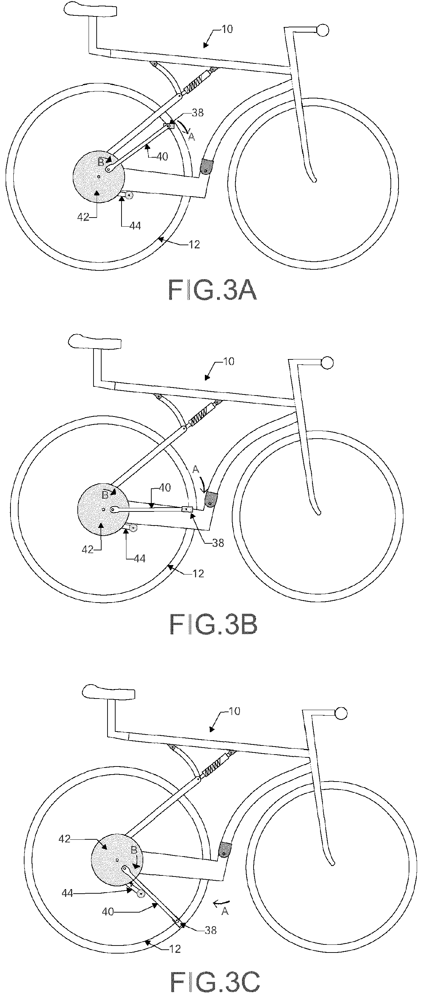

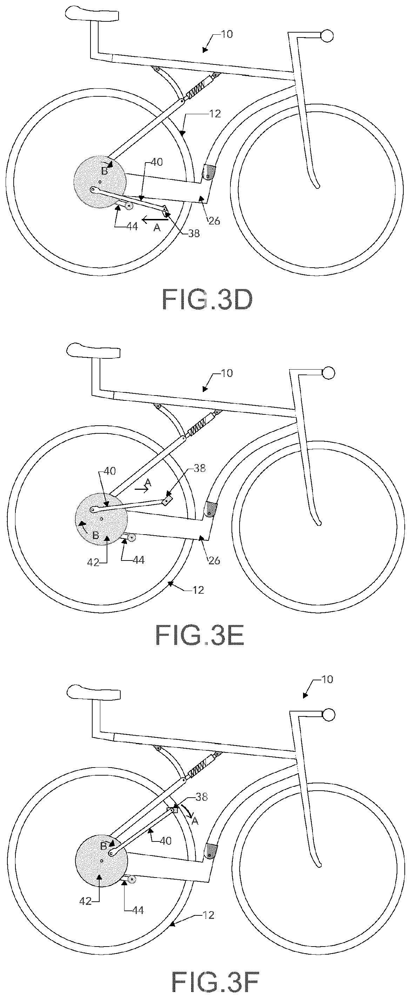

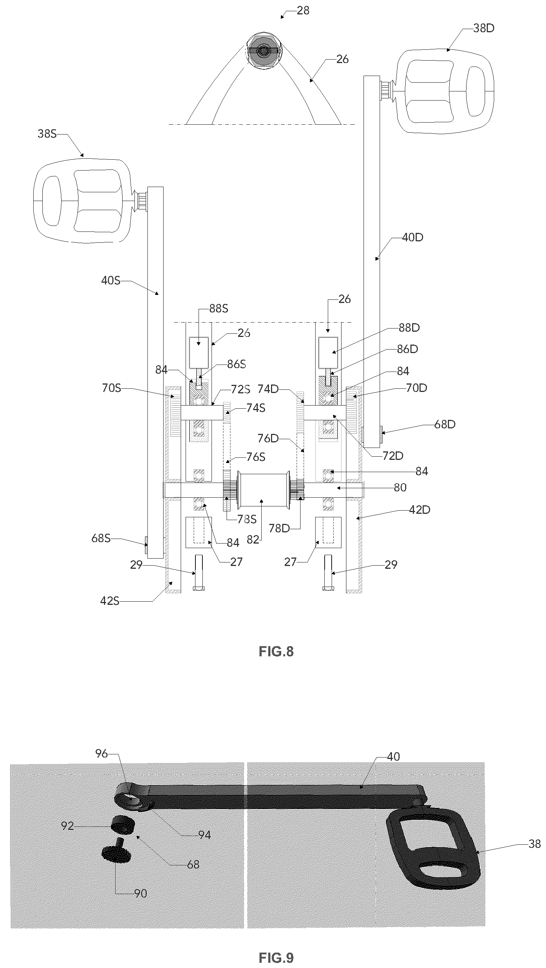

Figs. 3A-F show in sequence the various drive phases of the bicycle transmission unit **10** of Fig. 1. Below and in Figures 3A to 3F, only the parts affected by the drive are indicated. In the first step (Fig. 3A), a cyclist (not shown) presses the pedal **38** in the direction of the arrow **A.** Since the pedal **38** is connected in an articulated manner to the disc **42** by means of the crank **40**, the disc **42**, which is part of the transmission unit of the bicycle **10** also rotates in the direction of the arrow **B**. The transmission unit will be shown with respect to Fig. 8. To allow the movement of the aforementioned elements, both the connection between pedal **38** and crank **40** and the connection between crank **40** and disc **42** are articulated. The pedal **38** then follows the circumference of the wheel **12** and the crank **40** moves to the second phase (Fig. 3B) in an essentially horizontal position. Following the direction of the arrow **A**, the pedal **38** continues its movement always along the circumference of the wheel **12** to reach the position shown in Fig. 3C (third phase). Due to the travel stop system of which only the arm **44** is visible, the crank **40** is no longer movable in a circular shape around the centre of the wheel **12**, but, turning around its articulation with the disc **42,** follows the direction of the arrow **A** and is brought back to an essentially horizontal position to reach the position shown in Fig. 3D (fourth phase). The crank **40** continues to follow practically the direction of the arrow **A**, while the disc **42** travels during its rotation (arrow **B**) about another 90°. With its movement, the crank **40** moves from an essentially horizontal position below the horizontal rear chainstay **26** to an essentially horizontal position above it, as shown in the fifth phase (Fig. 3E). Following the crank **40** with its articulation to the disc **42** again an essentially horizontal movement (arrow **A**) to the right and then upwards, it returns to the sixth phase (Fig. 3F) which corresponds to the initial position according to Fig. 3A where a pedal path **38** begins again along the circumference of the wheel **12**.

In the active or positive thrust phase, the cyclist pushes the pedal **38** for about 90° along the circumference of the wheel **12** where then the effect of the travel stop **44** begins which forces the pedal **38** and the crank **40** in essentially horizontal movements forced primarily not by a thrust on the same pedal **38**, but by the action of the cyclist on the other pedal located on the opposite side of the bicycle **10**. It then switches to a passive or negative phase of this first pedal **38**, to return again to the beginning of its active or positive phase. The first three phases of Figures 3A to 3D are active, in phase four the passive phase begins which ends in phase five. With the sixth phase, the round begins again.

Figs. 4A-C show for the phases of Figs. 3C-E, the operation of the crank travel stop **40**. Compared to Figures 3C-E, the disc **42** has been removed to show the travel stop system better; instead, the disc **42** can be seen on the other side of the bicycle **10**. One end of an arm **44** is fixed in an articulated manner on the horizontal rear chainstay **26**, while the other end of the arm **44** is fixed on the relative crank **40** (not shown). The angular opening of the arm **44** relative to the horizontal rear chainstay **26** is limited by a spring **48** fixed to the arm **44** and the horizontal rear chainstay **26**. In the third phase (Fig. 4A), the arm **44**, moved by the movement of the crank **40,** opens at an angle with respect to the horizontal rear chainstay **26** extending the spring **48**. By continuing the movement of the crank **40** according to an essentially horizontal direction, the arm **44** is returned to an only slightly inclined position (Fig. 4B) with a more relaxed spring **48** to then reach the end of phase five (Fig. 4C) in its initial horizontal position with a fully relaxed spring **48.** It is therefore the travel stop system composed of arm **44** and spring **48** that forces the crank **40** from a circular movement to an essentially "horizontal" movement. The consequence is that the crank **40** is practically always located only in one half of the wheel **12** and that the pedal **38** travels an elliptical or oval path. In a traditional bicycle, the pedal follows a circular path.

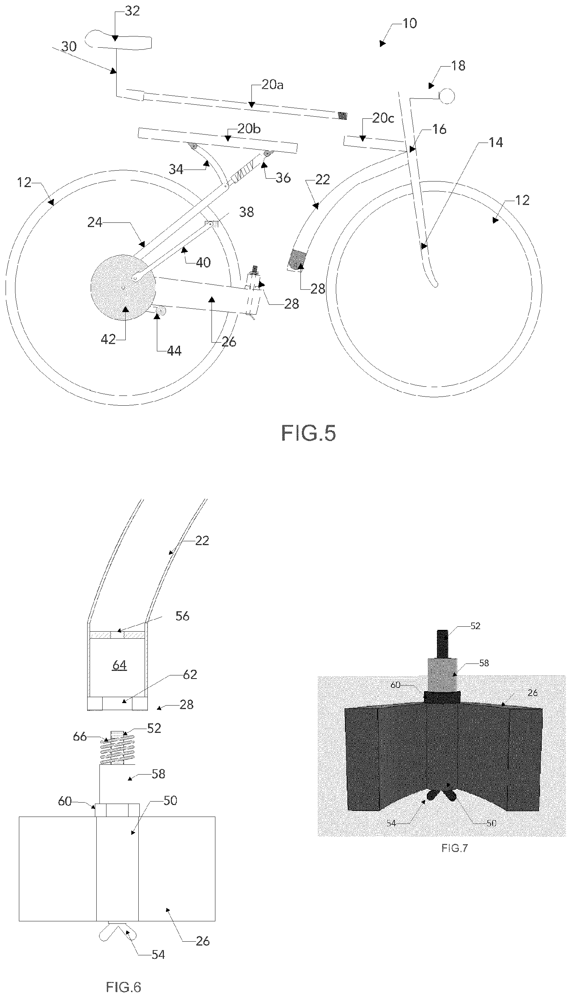

Fig. 5 shows the bicycle **10** of Fig. 1 in the disassembled state. The bicycle **10** shown is equipped with a mechanism so that it can be disassembled and is easier to transport. In this regard, the upper tube is not composed of a single piece, but comprises three tubes: a smaller-diameter tube **20a** which is inserted into the tubes **20b** (integral to the rear part of the bicycle **10**) and **20c** (integral to the front part of the bicycle **10**) to connect them. The tubes can then be fixed together, for example, with a bayonet closure. On the one hand it is therefore the tube **20a** that connects the front and the rear part, on the other hand it is the fixing means **28** that connect the parts connecting the horizontal rear chainstay **26** and the curved tube **22**. The fixing means **28** are shown in more detail in Figures 6 and 7. To assemble the bicycle **10**, first the tube **20a** is inserted into the tube **20b**, it is proceeded with closing the fixing means **28**, the tube **20b** is connected to the tube **20c** by pushing the inner tube **20a** to its final position inside the tube **20c**. To disassemble the bicycle **10**, the steps described above are carried out in the reverse order.

Fig. 6 shows in side section the lower locking mechanism or fixing means **28** of the bicycle of Fig. 1 in the disassembled state; and Fig. 7 shows a perspective view of the lower part of the lower closing mechanism of Fig. 6, viewed from the inside of the fork forming the horizontal rear chainstay **26**. The horizontal rear chainstay **26** is made as a fork that at the junction of the two sides comprises a hollow cylinder **50** through which a screw **52** passes that is screwable through the fins **54** into a compatible thread **56** that is located in the curved tube **22** at a position inside the tube **22** itself. The cylinder **50** continues with a second hollow cylinder **58** outside the horizontal rear chainstay **26**, always crossed by the screw **52**. A nut **60** with hexagonal or other geometry is disposed at the lower part of the second cylinder **58** and can be inserted into a hole of corresponding compatible geometry **62** located in the lower end of the curved tube **22** to create a defined positional initial connection between the curved tube **22** and the horizontal rear chainstay **26**. The second cylinder **58** in this case passes into the lower space **64** of the curved tube **22** and the screw is screwed into the thread **56.** A small elasticity of movement along the height of the hexagonal nut **60** is given by the spring **66** inserted on the screw **52** and by the path allowed by the degree of screwing (i.e. by the length of the portion of screw from the fins **54** to the thread **56**) to extract the nut **60** from its hole **62** and allow a rotation of the curved tube **22** around the cylinder **58** to be able to rotate the front part of the bicycle on the rear part without disassembling the tube **22** completely from the horizontal rear chainstay **26.**

Fig. 8 shows in a top view the bicycle transmission unit **10** of Fig. 1. For each side (right **D** and left **S**) a pedal **38D**, **38S** is provided fixed in articulated manner on a respective crank **40D**, **40S** connected with a ratchet system **68D**, **68S** (shown in Fig. 9) eccentrically on a disc **42D**, **42S** which is hollow inside and comprises a toothed circle (not shown). Inside each disc **42D**, **42S** rotates a smaller first gear wheel **70D**, **70S** due to the movement of the disc **42D**, **42S.** These first gear wheels **70D**, **70S** are connected by a shaft **72D**, **72S** to a second gear wheel **74D**, **74S** whose movement is the result of the connection to the respective first gear wheel **70D**, **70S** in rotation. Around each second gear wheel **74D**, **74S** is arranged a ring chain **76D**, **76S** which further extends around third gear wheels **78D**, **78S**. The movement of the second gear wheels **74D**, **74S** drags the respective chains **76D**, **76S** which in turn rotate the third gear wheels **78D**, **78S** inserted in a rotatable manner on an axle **80** which comprises on its ends in a freely rotatable manner the two discs **42D**, **42S** and, fixed between the two third gear wheels **78D**, **78S**, the hub **82** carrying the wheel (not shown). The movement of the third gear wheels **78D**, **78S** involves the movement of the connected hub **82** and thus of the wheel around the axle **80**. The shafts **72D**, **72S** and the axle **80** are housed in respective bearings **84** contained in the horizontal rear chainstay **26** which for the insertion thereof can be disassembled at its ends **27** which are screwable with respective screws **29** to the main body **26**. Different diameters of the gear wheels (as shown in the figure with the second gear wheels **74D** and **74S**) allow different transmission ratios creating a kind of gearbox, in this case with two different gears. By fixing, for example, the wheel **74D** (i.e. the relative shaft **72D** inside its bearing **84**) with a pin **86D** operable through a gear control unit **88D** and leaving the other gear wheel free **74S** (operable with a respective control system **86S** and **88S**), the transmission ratio can be chosen. Reversing the choice changes the gear. The disc **42D** or **42S** remains movable around the first gear wheels **70D** and **70S** even if the shaft **72D** or **72S** stops.

Fig. 9 shows in a perspective view, partially exploded, the ratchet mechanism **68** inserted in a hole **96** of the crank **40** with pedal **38.** The ratchet mechanism **68** ensures an articulated connection and works according to the principle well known in the art and comprises a small gear wheel **90** and a release tooth **94**. Between the small gear wheel **90** and the release tooth **94,** in the ratchet according to the invention, a bearing **92** is placed to decrease friction and reduce wear due to continuous use during pedalling. During the active phase of the pedalling, the ratchet **68** allows an active movement of the disc **42** (not shown). During the passive phase of the pedalling, the ratchet **68** does not allow a movement in the opposite direction of the crank **40** around the axle of the ratchet **68** and therefore of the connected disc **42** (not shown). But the articulation between crank **40** and disc **42** still allows the position of the crank **40** to be changed between "radial" (active phases, approximately 90° of a complete rotation of the disc **42**) and "horizontal" (passive phases, approximately 270° of a complete rotation of the disc **42**).

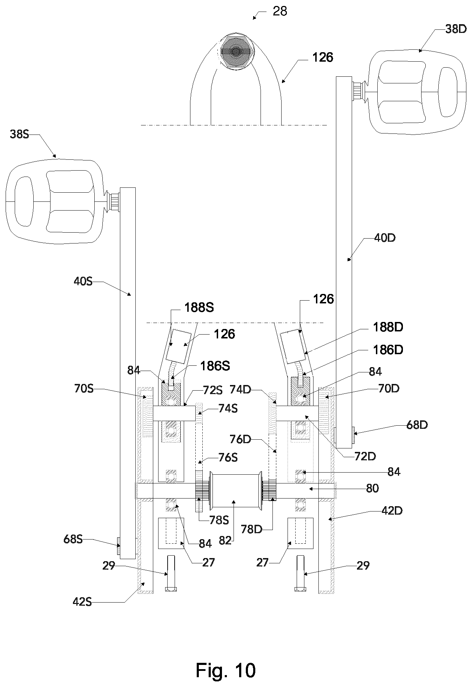

Finally, fig. 10 illustrates in a top view the bicycle transmission unit **10** of Fig. 8 with an implementation variant of the horizontal rear chainstay **126.** The variant of Fig. 10 corresponds to the embodiment of Fig. 8 with the exception of the horizontal rear chainstay **126**, in which two sides are not parallel to the two ends fixed in the bearings **84**, but inclined to obtain a more aerodynamic and less bulky horizontal rear chainstay **126** at the front part. To allow for this configuration, the pins **186S** and **186D** were curved with respect to the straight pins **86S** and **86D** of Fig. 8, and the motors **188S** and **188D** were shifted and brought closer together.

All the systems shown, such as the pedal-crank pair, the gear wheels or transmission rings, the crank travel stop system exist in duplicate, one copy for each side, practically mirrored. Only the position of the crank and the pedal are not mirrored to each other, if one pedal or crank is located at the top, the other is located at the bottom and vice versa.

The bicycle shown with the upper tube **20**, which is necessary to fix the damping system **34**, **36** and for the disassembly of the bicycle and, in the absence of the vertical tube, to give stability to the frame, corresponds to the "male" version of the bicycle **10**. To adapt the bicycle **10** to the female version, that is, by mitigating the presence of the upper tube **20**, it is possible to reduce the distance between the upper tube **20** and the wheel **12**, by raising the seat post **30**.

## Claims

1. A bicycle (10) comprising:
(a) a frame comprising:
(a-1) a fork (14);
(a-2) a horizontal rear chainstay (26);
(a-3) an oblique rear chainstay (24);
(a-4) an upper tube (20; 20a, 20b, 20c);
(b) a handlebar (18) on the top of the fork (14);
(c) a saddle (32);
(d) at least two wheels (12) of which one front wheel hangs in a freely rotatable manner in the fork (14) and one rear wheel is housed on the horizontal rear chainstay (26);
(e) a transmission unit suitable for driving the rear wheel and comprising:
(e-1) two opposite cranks (40; 40D, 40S) each equipped with a respective pedal (38; 38D, 38S);
(e-2) two opposing discs (42; 42D, 42S) facing with an inner cylindrical cavity equipped with an inner toothed ring toward the rear wheel;
(e-3) two opposing first gear wheels (70D, 70S) each housed in a rotatable manner in one of said discs (42; 42D, 42S) meshing with the respective toothed inner ring;
(e-4) at least two opposing second gear wheels (74D, 74S) each connected by a respective shaft (72D, 72S) to one of said first gear wheels (70D, 70S);
(e-5) a hub bearing on a central cylindrical part (82) the rear wheel and equipped on opposite sides of the cylindrical part (82) with two third gear wheels (78D, 78S);
(e-6) two opposing ring chains (76D, 76S) meshing each with the toothings of said second (74D, 74S) and third (78D, 78S) gear wheels of the same side of the bicycle (10) or meshing with a gear change, inserted between the second (74D, 74S) and third (78D, 78S) gear wheels, and with the third gear wheels making a relative drive connection;
wherein an axle (80) supports in freely rotatable manner said hub and connects the two discs (42; 42D, 42S) so as to permit the free rotation of the two disks (42; 42D, 42S) about the axle (80); and
wherein said cranks (40; 40D, 40S) are each connected with one end to one of the discs (42; 42D, 42S) so that it can be moved, during use of the bicycle, around said axle (80) by pushing on the pedal (38; 38D, 38 S) connected to the other end of the crank (40; 40D, 40S).

2. The bicycle (10) according to claim 1, **characterized in that** there is a ratchet connection (68) between each crank (40; 40D, 40S) and the respective disc (42; 42D, 42S) for transmitting the movement of the crank (40; 40D, 40S) to the respective disc (42; 42D, 42S).

3. The bicycle (10) according to claim 1 or 2, **characterized in that** said second gear wheels (74D, 74S) have different diameters and that for each first gear wheel (70D, 70S) there is an engagement/disengagement device (86D, 88D; 86S, 88S) to bring the respective first gear wheel (70D, 70S) closer to/farther from the toothed inner ring of the respective disc (42; 42D, 42S).

4. The bicycle (10) according to any of the preceding claims, **characterized in that** said oblique rear chainstay (24) on one end is fixed on said horizontal rear chainstay (26) and on the other end is equipped with an articulated bifurcation (46) which with the two rods (34, 36) is fixed in an articulated manner on said upper tube (20) forming a triangle wherein said front rod (36) is equipped with an elastic element.

5. The bicycle (10) according to any one of the preceding claims, **characterized in that** said horizontal rear chainstay (26) is connected along a connecting axis by means of fixing means (28) to said curved or oblique tube (22) wherein said fixing means (28) in a partially open state permit a rotation of said horizontal rear chainstay (26) and/or said curved or oblique tube (22) about the connecting axis.

6. The bicycle (10) according to any one of the preceding claims, **characterized in that** it does not comprise a rear vertical tube for connecting said rear horizontal chainstay (26) to said upper tube (20) and that said saddle (32) is fixed on said upper tube (20), the end of which is not supported by other parts of the frame.

7. The bicycle (10) according to any of the preceding claims, **characterized by** further comprising:
(f) a travel stop (44, 48) for each crank (40; 40D, 40S) comprising:
(f-1) an arm (44) fixed with one end on said horizontal rear chainstay (26) and with the other end on the respective crank (40; 40D, 40S); and
(f-2) an elastic element (48), in particular a spring, fixed with one end on said arm (44) and with the other end on said horizontal rear chainstay (26) so as to limit the angular opening of the arm (44) with respect to the horizontal rear chainstay (26) and to force the pedal (38; 38D, 38S) during use to a movement along an essentially oval path,
wherein preferably the crank (40; 40D, 40S) is eccentrically fixed on the disc (42; 42D,42S) and the pedal (38; 38D, 38S) during use preferably does not protrude more than 5 cm beyond the rear wheel.

8. The bicycle (10) according to any one of the preceding claims, **characterized in that** the connection of the fixing means (28) between said horizontal rear chainstay (26) and said curved or oblique tube (22) is disassemblable and that said upper tube (20) comprises:
(a-4.1) a first portion of hollow upper tube (20c) fixed to said fork (14);
(a-4.2) a second portion of hollow upper tube (20b) to which said oblique rear chain stay (24) is fixed; and
(a-4.3) a third portion of upper tube (20a) bearing on one end said saddle (32) and insertable by a relative closure in said first (20c) and said second (20b) portion of hollow upper tube.

9. Process for propelling a bicycle (10) comprising the following steps:
(I) provision of a bicycle (10) according to any one of the preceding claims;
(II) exerting a force on a pedal (38; 38D, 38S) of a crank (40; 40D, 40S) causing the rotation of the respective disc (42; 42D, 42S);
(III) by meshing of the inner toothing of the disc (42; 42D, 42S) in motion with said first gear wheel (70D, 70S) set into rotation of the first gear wheel (70D, 70S);
(IV) via the shaft (72D, 72S) transmission of the rotary motion of said first gear wheel (70D, 70S) to said second gear wheel (74D, 74S);
(V) entrainment of said ring chain (76D, 76S) by the movement of said second gear wheel (74D, 74S) and transmission of rotary motion to said third gear wheel (78D, 78S) which, being connected to said cylindrical part (82) of said hub puts said rear wheel (12) into rotation;
wherein the phases (II) to (V) occur in alternating manner between the right and left sides of the bicycle (10).

10. Method of assembling-disassembling a bicycle (10) comprising the following steps:
(i) provision of a bicycle (10) according to claim 8 and equipped with fixing means (28) provided between the horizontal rear chainstay (26) and the curved tube (22);
(ii) for assembling
(ii-1) insertion of said third upper tube portion (20a) into said second hollow upper tube portion (20b);
(ii-2) closing the fixing means (28) of the connection between the rear horizontal chainstay (26) and the curved or oblique tube (22);
(ii-3) connection of the second portion of the upper tube (20b) to the first portion of the upper tube (20c) by pushing the third portion of the upper tube (20a) into said first portion of the upper tube (20c) and closing the closure provided; or
(iii) for disassembling:
(iii-1) releasing said closure and extracting said third upper tube portion (20a) from said first upper tube portion (20c);
(iii-2) opening of the fixing means (28) of the connection between rear horizontal chainstay (26) and the curved or oblique tube (22);
(iii-3) extraction of said third upper tube portion (20a) from said second hollow upper tube portion (20b).

## Patentansprüche

1. Fahrrad (10) umfassend:
(a) einen Rahmen umfassend:
(a-1) eine Gabel (14);
(a-2) eine horizontale hintere Kettenstrebe (26);
(a-3) eine schräge hintere Kettenstrebe (24);
(a-4) ein Oberrohr (20; 20a, 20b, 20c);
(b) einen Lenker (18) auf der Oberseite der Gabel (14);
(c) einen Sattel (32);
(d) mindestens zwei Räder (12), von denen ein Vorderrad frei drehbar in der Gabel (14) hängt und ein Hinterrad auf der horizontalen hinteren Kettenstrebe (26) gelagert ist;
(e) eine zum Antrieb des Hinterrades geeignete Getriebeeinheit, die umfasst:
(e-1) zwei gegenüberliegende Kurbeln (40; 40D, 40S), die jeweils mit einem entsprechenden Pedal (38; 38D, 38S) ausgestattet sind;
(e-2) zwei gegenüberliegende Scheiben (42; 42D, 42S), die mit einer inneren zylindrischen Ausnehmung, die mit einem inneren Zahnkranz zum Hinterrad hin ausgestattet ist, einander zugewandt sind;
(e-3) zwei gegenüberliegende erste Zahnräder (70D, 70S), die jeweils drehbar in einer der Scheiben (42; 42D, 42S) gelagert sind und mit dem jeweiligen inneren Zahnkranz in Eingriff stehen;
(e-4) mindestens zwei gegenüberliegende zweite Zahnräder (74D, 74S), die jeweils über eine entsprechende Welle (72D, 72S) mit einem der ersten Zahnräder (70D, 70S) verbunden sind;
(e-5) ein Nabenlager, das an einem zentralen zylindrischen Teil (82) das Hinterrad trägt und auf gegenüberliegenden Seiten des zylindrischen Teils (82) mit zwei dritten Zahnrädern (78D, 78S) ausgestattet ist;
(e-6) zwei gegenüberliegende Ringketten (76D, 76S), die jeweils mit den Verzahnungen des zweiten (74D, 74S) und dritten (78D, 78S) Zahnrads auf derselben Seite des Fahrrads (10) in Eingriff stehen oder mit einer zwischen den zweiten (74D, 74S) und dritten (78D, 78S) Zahnrädern eingefügten Gangschaltung in Eingriff stehen, wobei die dritten Zahnräder eine relative Antriebsverbindung bilden;
wobei eine Achse (80) besagte Nabe frei drehbar trägt und die beiden Scheiben (42; 42D, 42S) so verbindet, dass die beiden Scheiben (42; 42D, 42S) um die Achse (80) frei drehen können; und
wobei die Kurbeln (40; 40D, 40S) jeweils mit einem Ende mit einer der Scheiben (42; 42D, 42S) verbunden, so dass sie während der Benutzung des Fahrrads um die Achse (80) bewegt werden kann, indem das mit dem anderen Ende der Kurbel (40; 40D, 40S) verbundene Pedal (38; 38D, 38S) betätigt wird.

2. Das Fahrrad (10) gemäß Anspruch 1, **dadurch gekennzeichnet, dass** zwischen jeder Kurbel (40; 40D, 40S) und der jeweiligen Scheibe (42; 42D, 42S) eine Ratschenverbindung (68) vorhanden ist, um die Bewegung der Kurbel (40; 40D, 40S) auf die jeweilige Scheibe (42; 42D, 42S) zu übertragen.

3. Das Fahrrad (10) gemäß Anspruch 1 oder 2, **dadurch gekennzeichnet, dass** besagte zweite Zahnräder (74D, 74S) unterschiedliche Durchmesser aufweisen und dass für jedes erste Zahnrad (70D, 70S) eine Einrück-/Ausrückvorrichtung (86D, 88D; 86S, 88S) vorgesehen ist, um das jeweilige erste Zahnrad (70D, 70S) näher an den verzahnten Innenring der jeweiligen Scheibe (42; 42D, 42S) heranzuführen bzw. von diesem weiter zu entfernen.

4. Das Fahrrad (10) gemäß einem beliebigen der vorstehenden Ansprüche, **dadurch gekennzeichnet, dass** die schräge hintere Kettenstrebe (24) an einem Ende an der horizontalen hinteren Kettenstrebe (26) befestigt ist und am anderen Ende mit einer gelenkigen Gabelung (46) ausgestattet ist, die mit den beiden Stangen (34, 36) gelenkig an dem oberen Rohr (20) befestigt ist und ein Dreieck bildet, wobei die vordere Stange (36) mit einem elastischen Element ausgestattet ist.

5. Das Fahrrad (10) gemäß einem beliebigen der vorstehenden Ansprüche, **dadurch gekennzeichnet, dass** die horizontale hintere Kettenstrebe (26) entlang einer Verbindungsachse mittels Befestigungsmitteln (28) mit dem gekrümmten oder schrägen Rohr (22) verbunden ist, wobei die Befestigungsmittel (28) in einem teilweise geöffneten Zustand eine Drehung der horizontalen hinteren Kettenstrebe (26) und/oder des gekrümmten oder schrägen Rohrs (22) um die Verbindungsachse ermöglichen.

6. Fahrrad (10) nach einem beliebigen der vorstehenden Ansprüche, **dadurch gekennzeichnet, dass** es kein hinteres vertikales Rohr zum Verbinden der hinteren horizontalen Kettenstrebe (26) mit dem oberen Rohr (20) umfasst und dass besagter Sattel (32) an dem oberen Rohr (20) befestigt ist, dessen Ende nicht von anderen Teilen des Rahmens gestützt wird.

7. Fahrrad (10) nach einem beliebigen der vorstehenden Ansprüche, **dadurch gekennzeichnet, dass** es ferner umfasst:
(f) einen Bewegungsanschlag (44, 48) für jede Kurbel (40; 40D, 40S), umfassend:
(f-1) einen Arm (44), der mit einem Ende an der horizontalen hinteren Kettenstrebe (26) und mit dem anderen Ende an der jeweiligen Kurbel (40; 40D, 40S) befestigt ist; und
(f-2) ein elastisches Element (48), insbesondere eine Feder, das mit einem Ende an dem Arm (44) und mit dem anderen Ende an der horizontalen hinteren Kettenstrebe (26) befestigt ist, um die Winkelöffnung des Arms (44) in Bezug auf die horizontale hintere Kettenstrebe (26) zu begrenzen und das Pedal (38; 38D, 38S) während des Gebrauchs zu einer Bewegung entlang einer im Wesentlichen ovalen Bahn zu zwingen,
wobei vorzugsweise die Kurbel (40; 40D, 40S) exzentrisch an der Scheibe (42; 42D, 42S) befestigt ist und das Pedal (38; 38D, 38S) während des Gebrauchs vorzugsweise nicht mehr als 5 cm über das Hinterrad hinausragt.

8. Das Fahrrad (10) gemäß einem beliebigen der vorstehenden Ansprüche, **dadurch gekennzeichnet, dass** die Verbindung der Befestigungsmittel (28) zwischen der horizontalen hinteren Kettenstrebe (26) und dem gekrümmten oder schrägen Rohr (22) demontierbar ist und dass besagtes oberes Rohr (20) umfasst:
(a-4.1) einen ersten Abschnitt des hohlen oberen Rohrs (20c), der an der Gabel (14) befestigt ist;
(a-4.2) einen zweiten Abschnitt des hohlen oberen Rohrs (20b), an dem die schräge hintere Kettenstrebe (24) befestigt ist; und
(a-4.3) einen dritten Abschnitt des oberen Rohrs (20a), der an einem Ende den Sattel (32) trägt und durch einen entsprechenden Verschluss in den ersten (20c) und zweiten (20b) Abschnitt des hohlen oberen Rohrs eingesetzt werden kann.

9. Verfahren zum Antreiben eines Fahrrads (10), das die folgenden Schritte umfasst:
(I) Bereitstellen eines Fahrrads (10) gemäß einem der vorstehenden Ansprüche;
(II) Ausüben einer Kraft auf ein Pedal (38; 38D, 38S) einer Kurbel (40; 40D, 40S), wodurch die jeweilige Scheibe (42; 42D, 42S) in Drehung versetzt wird;
(III) durch Eingriff der Innenverzahnung der Scheibe (42; 42D, 42S) in Bewegung mit besagtem erstem Zahnrad (70D, 70S) wird das erste Zahnrad (70D, 70S) in Drehung versetzt;
(IV) über die Welle (72D, 72S) Übertragung der Drehbewegung des ersten Zahnrades (70D, 70S) auf das zweite Zahnrad (74D, 74S);
(V) Mitnehmen besagter Ringkette (76D, 76S) durch die Bewegung besagten zweiten Zahnrades (74D, 74S) und Übertragung der Drehbewegung auf besagtes drittes Zahnrad (78D, 78S), das, indem es mit besagtem zylindrischem Teil (82) besagter Nabe verbunden ist, das Hinterrad (12) in Drehung versetzt;
wobei die Schritte (II) bis (V) abwechselnd auf der rechten und linken Seite des Fahrrads (10) erfolgen.

10. Methode zum Zusammenbauen und Zerlegen eines Fahrrads (10), die folgende Schritte umfassend:
(i) Bereitstellen eines Fahrrads (10) gemäß Anspruch 8, das mit Befestigungsmitteln (28) ausgestattet ist, die zwischen der horizontalen hinteren Kettenstrebe (26) und dem gekrümmten Rohr (22) vorgesehen sind;
(ii) zum Zusammenbau
(ii-1) Einführen des dritten oberen Rohrabschnitts (20a) in den zweiten hohlen oberen Rohrabschnitt (20b);
(ii-2) Schließen der Befestigungsvorrichtung (28) der Verbindung zwischen der hinteren horizontalen Kettenstrebe (26) und dem gekrümmten oder schrägen Rohr (22);
(ii-3) Verbinden des zweiten Abschnitts des oberen Rohrs (20b) mit dem ersten Abschnitt des oberen Rohrs (20c) durch Eindrücken des dritten Abschnitts des oberen Rohrs (20a) in den ersten Abschnitt des oberen Rohrs (20c) und Schließen der vorgesehenen Verschlussvorrichtung; oder
(iii) zum Zerlegen:
(iii-1) Lösen besagten Verschlusses und Herausziehen besagten dritten oberen Rohrteils (20a) aus dem ersten oberen Rohrteil (20c);
(iii-2) Öffnen der Befestigungsvorrichtung (28) der Verbindung zwischen der hinteren horizontalen Kettenstrebe (26) und dem gekrümmten oder schrägen Rohr (22);
(iii-3) Herausziehen besagten dritten oberen Rohrabschnitts (20a) aus besagtem zweiten hohlen oberen Rohrabschnitt (20b).

## Revendications

1. Vélo (10) comprenant:
(a) un cadre comprenant:
(a-1) une fourche (14);
(a-2) une base arrière horizontale (26);
(a-3) une base arrière oblique (24);
(a-4) un tube supérieur (20 ; 20a, 20b, 20c);
(b) un guidon (18) sur le dessus de la fourche (14);
(c) une selle (32);
(d) au moins deux roues (12) dont une roue avant est suspendue de manière à pouvoir tourner librement dans la fourche (14) et une roue arrière est logée sur la base arrière horizontale (26);
(e) une unité de transmission adaptée pour entraîner la roue arrière et comprenant:
(e-1) deux manivelles opposées (40 ; 40D, 40S) équipées chacune d'une pédale respective (38 ; 38D, 38S);
(e-2) deux disques opposés (42 ; 42D, 42S) se faisant face avec une cavité cylindrique interne équipée d'une couronne dentée interne vers la roue arrière;
(e-3) deux premières roues dentées opposées (70D, 70S) logées chacune de manière rotative dans l'un desdits disques (42 ; 42D, 42S) engrenant avec la couronne dentée interne respective;
(e-4) au moins deux deuxièmes roues dentées opposées (74D, 74S) reliées chacune par un arbre respectif (72D, 72S) à l'une desdites premières roues dentées (70D, 70S);
(e-5) un moyeu supportant sur une partie cylindrique centrale (82) la roue arrière et équipé sur les côtés opposés de la partie cylindrique (82) de deux troisièmes roues dentées (78D, 78S);
(e-6) deux chaînes à anneaux opposées (76D, 76S) s'engrenant chacune avec les dentures desdites deuxième (74D, 74S) et troisième (78D, 78S) roues dentées du même côté du vélo (10) ou s'engrenant avec un changement de vitesse, inséré entre les deuxième (74D, 74S) et troisième (78D, 78S) roues dentées, et avec les troisièmes roues dentées formant une connexion d'entraînement relative;
dans lequel un axe (80) supporte de manière librement rotative ledit moyeu et relie les deux disques (42 ; 42D, 42S) de manière à permettre la libre rotation des deux disques (42 ; 42D, 42S) autour de l'axe (80); et
dans lequel lesdites manivelles (40 ; 40D, 40S) sont chacune reliées par une extrémité à l'un des disques (42 ; 42D, 42S) de manière à pouvoir être déplacé, pendant l'utilisation du vélo, autour dudit axe (80) en poussant sur la pédale (38 ; 38D, 38S) reliée à l'autre extrémité de la manivelle (40 ; 40D, 40S).

2. Le vélo (10) selon la revendication 1, **caractérisé en ce qu'**il existe une connexion à cliquet (68) entre chaque manivelle (40 ; 40D, 40S) et le disque respectif (42 ; 42D, 42S) pour transmettre le mouvement de la manivelle (40 ; 40D, 40S) au disque respectif (42 ; 42D, 42S).

3. Le vélo (10) selon la revendication 1 ou 2, **caractérisé en ce que** lesdits seconds roues dentées (74D, 74S) ont des diamètres différents et **en ce que** pour chaque première roue dentée (70D, 70S), il existe un dispositif d'engagement/désengagement (86D, 88D ; 86S, 88S) pour rapprocher/éloigner la première roue dentée respective (70D, 70S) de la couronne dentée interne du disque respectif (42 ; 42D, 42S).

4. Le vélo (10) selon l'une quelconque des revendications précédentes, **caractérisé en ce que** ladite base arrière oblique (24) est fixée à une extrémité sur ladite base arrière horizontale (26) et est équipée à l'autre extrémité d'une bifurcation articulée (46) qui, avec les deux tiges (34, 36) est fixée de manière articulée sur ledit tube supérieur (20) formant un triangle dans lequel ladite tige avant (36) est équipée d'un élément élastique.

5. Le vélo (10) selon l'une quelconque des revendications précédentes, **caractérisée en ce que** ladite base arrière horizontale (26) est reliée le long d'un axe de liaison au moyen de moyens de fixation (28) audit tube courbé ou oblique (22), dans lequel lesdits moyens de fixation (28) dans un état partiellement ouvert permettent une rotation de ladite base arrière horizontale (26) et/ou dudit tube courbé ou oblique (22) autour de l'axe de liaison.

6. Le vélo (10) selon l'une quelconque des revendications précédentes, **caractérisé en ce qu'il** ne comprend pas de tube vertical arrière pour relier ladite base horizontale arrière (26) audit tube supérieur (20) **et en ce que** ladite selle (32) est fixée sur ledit tube supérieur (20), dont l'extrémité n'est pas supportée par d'autres parties du cadre.

7. Le vélo (10) selon l'une quelconque des revendications précédentes, **caractérisé en ce qu'il** comprend en outre:
(f) une butée de course (44, 48) pour chaque manivelle (40 ; 40D, 40S) comprenant :
(f-1) un bras (44) fixé à une extrémité sur ladite base arrière horizontale (26) et à l'autre extrémité sur la manivelle respective (40 ; 40D, 40S); et
(f-2) un élément élastique (48), en particulier un ressort, fixé à une extrémité sur ledit bras (44) et à l'autre extrémité sur ladite base arrière horizontale (26) de manière à limiter l'ouverture angulaire du bras (44) par rapport à la base arrière horizontale (26) et à forcer la pédale (38 ; 38D, 38S) pendant l'utilisation à un mouvement suivant une trajectoire essentiellement ovale,
dans lequel, de préférence, la manivelle (40 ; 40D, 40S) est fixée de manière excentrique sur le disque (42 ; 42D, 42S) et la pédale (38 ; 38D, 38S) pendant l'utilisation ne dépasse de préférence pas de plus de 5 cm de la roue arrière.

8. Le vélo (10) selon l'une quelconque des revendications précédentes, **caractérisé en ce que** la connexion des moyens de fixation (28) entre ladite base arrière horizontale (26) et ledit tube courbé ou oblique (22) est démontable et **en ce que** ledit tube supérieur (20) comprend :
(a-4.1) une première partie de tube supérieur creux (20c) fixée à ladite fourche (14);
(a-4.2) une deuxième partie de tube supérieur creux (20b) à laquelle est fixée ladite base arrière oblique (24); et
(a-4.3) une troisième partie de tube supérieur (20a) supportant à une extrémité ladite selle (32) et pouvant être insérée par une fermeture relative dans ladite première (20c) et ladite deuxième (20b) partie de tube supérieur creux.

9. Procédé pour propulser un vélo (10) comprenant les étapes suivantes:
(I) fourniture d'un vélo (10) selon l'une quelconque des revendications précédentes;
(II) exercice d'une force sur une pédale (38 ; 38D, 38S) d'une manivelle (40 ; 40D, 40S) provoquant la rotation du disque respectif (42 ; 42D, 42S);
(III) engrènement de la denture interne du disque (42 ; 42D, 42S) en mouvement avec ladite première roue dentée (70D, 70S) mise en rotation de la première roue dentée (70D, 70S);
(IV) via l'arbre (72D, 72S), transmission du mouvement rotatif de ladite première roue dentée (70D, 70S) à ladite deuxième roue dentée (74D, 74S);
(V) entraînement de ladite chaîne a anneaux (76D, 76S) par le mouvement de ladite deuxième roue dentée (74D, 74S) et transmission du mouvement rotatif à ladite troisième roue dentée (78D, 78S) qui, étant reliée à ladite partie cylindrique (82) dudit moyeu, met ladite roue arrière (12) en rotation;
les phases (II) à (V) se produisant de manière alternée entre les côtés droit et gauche du vélo (10).

10. Méthode d'assemblage-désassemblage d'un vélo (10) comprenant les étapes suivantes:
(i) fourniture d'un vélo (10) selon la revendication 8 et équipé de moyens de fixation (28) prévus entre la base arrière horizontale (26) et le tube courbé (22);
(ii) pour l'assemblage
(ii-1) insertion de ladite troisième partie supérieure du tube (20a) dans ladite deuxième partie supérieure du tube creux (20b);
(ii-2) fermeture des moyens de fixation (28) de la connexion entre la base arrière horizontale (26) et le tube courbé ou oblique (22);
(ii-3) raccordement de la deuxième partie du tube supérieur (20b) à la première partie du tube supérieur (20c) en poussant la troisième partie du tube supérieur (20a) dans ladite première partie du tube supérieur (20c) et en fermant la fermeture prévue; ou
(iii) pour le démontage:
(iii-1) libération de ladite fermeture et extraction de ladite troisième partie du tube supérieur (20a) de ladite première partie du tube supérieur (20c);
(iii-2) ouvrir le moyen de fixation (28) de la connexion entre la base horizontale arrière (26) et le tube courbé ou oblique (22);
(iii-3) extraire ladite troisième partie de tube supérieur (20a) de ladite deuxième partie de tube supérieur creux (20b).
